# EUROPEAN PATENT APPLICATION

(11) **EP 4 807 496 A1**
(43) Date of publication of application: **16.09.2026**
(21) Application number: 25219685.2
(22) Date of filing: 01.12.2025
(51) Int. Cl.: G06F 1/3231, G06F 1/3206, G06F 1/26, G06F 21/81, G06F 21/31

(54) **SECURE POWER CYCLING OF COMPUTING SYSTEMS**

(30) Priority: 12.03.2025 US 202519077302
(71) Applicant: INTEL Corporation, Santa Clara, CA 95054 (US)
(72) Inventor: AGARWAL, Alok, 560026 Bangalore (IN); MAILAPUR, Deepti, Bangalore (IN)
(74) Representative: Viering, Jentschura & Partner mbB Patent- und Rechtsanwälte

(57) **Abstract**

Before a computing system transitions to a lower power state (e.g., powers down to an off state), the identity of a user is authenticated to avoid unauthorized power cycling. For headed computing systems, this can comprise the headed computing system determining that a user is logged into the headed computing system. A headless computing system may transition to a lower power state if the identity of a user at a computing system that remotely controls the headless computing system is authenticated. A standalone computing system may transition to a lower power state if the identity of the user operating the power control mechanism is authenticated by the standalone computing system. User authentication can comprise password or biometric verification.

## Description

### BACKGROUND

Power cycling of a computing system typically comprises powering down or rebooting the computing system. In some computing systems, power cycling requires that a power button be held down for a designated period (e.g., several seconds).

### BRIEF DESCRIPTION OF THE DRAWINGS

FIG. 1 illustrates components that enable secure power cycling in a headed computing system.
FIG. 2 illustrates a headless system with remote control-enabled secure power cycling.
FIG. 3 is a block diagram of a first example of a standalone electronic device with secure power cycling capabilities.
FIG. 4 is a block diagram of a second example standalone electronic device with secure power cycling capabilities.
FIG. 5 is a first secure power cycling method.
FIG. 6 is a second secure power cycling method.
FIG. 7 is a third secure power cycling method.
FIG. 8 is a fourth secure power cycling method.
FIG. 9 is a block diagram of an example computing system in which the secure power cycling technologies described herein may be implemented.
FIG. 10 is a block diagram of an example processor unit to execute computer-executable instructions as part of implementing the secure power cycling technologies described herein.

### DETAILED DESCRIPTION

In existing computing systems, any user can cause the system to power down by operating a mechanical power control mechanism, such as by holding down a power button for a specified amount of time. Operation of a power control mechanism performed without the consent of a legitimate user of the system can result in unauthorized power cycling of a computing system.

Unauthorized power cycles can have significant consequences. One concern is the risk to human safety, particularly in environments that rely on continuous power. The malfunctioning of medical devices that provide life-sustaining operations, such as ventilators and dialysis machines, can pose serious health risks to patients. Similarly, failures in critical infrastructure, such as power grids, water supply systems, and essential services, can jeopardize public safety. Transportation systems are also vulnerable, as disruptions in air traffic control, traffic control, or railway systems can lead to accidents or delays. Unauthorized power cycles can also have a detrimental effect on the operational life of computing systems, which can negatively impact business operations by reducing productivity and potentially causing financial losses.

Another consequence of unauthorized power cycling is data loss and the integrity of the computing systems being compromised. Unauthorized power cycles can result in the loss of unsaved data, which can be detrimental in personal and professional settings. Unexpected system shutdowns may corrupt system files, leading to stability issues. Hardware and software malfunctions can arise from unauthorized power cycling, rendering devices inoperable or requiring costly repairs. Security vulnerabilities may also increase, as malicious actors may exploit improper shutdowns to gain unauthorized access or launch cyberattacks. Unexpected power interruptions can also disrupt critical operations, affecting industries that rely on continuous system availability, such as finance, healthcare, and telecommunications.

Described herein are secure power cycling technologies that can reduce the likelihood of the unauthorized power cycling of computing systems by integrating user authentication into the power management process. Secure power cycling can reduce the chances of the consequences discussed above from occurring. In various embodiments, before a computing system powers down or reboots in response to the operation of its power control mechanism, the computing system can verify that someone is logged into the computing system or perform local or remote user authentication. If a user is not logged on or the user authentication fails, the operation of the power control mechanism is ignored, and the computing system is kept in its current power state. The secure power cycling techniques discussed herein can be implemented in software, hardware, firmware, or any combination thereof, as discussed in greater below. The disclosed technologies can be implemented across different hardware and software platforms, thus providing a versatile solution that can be adapted to meet the security needs of a broad range of devices and industries, such as consumer electronics, enterprise computing solutions, industrial control systems, automotive systems, and healthcare devices. In an era where data breaches are common, the disclosed secure power cycling technologies may enhance consumer trust in a company's products, giving them a competitive edge.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or in any other manner. The term "coupled" may indicate elements cooperate or interact with each other, but they may or may not be in direct physical or electrical contact. Furthermore, the terms "comprising," "including," "having," and the like, as used with respect to embodiments of the present disclosure, are synonymous.

As used herein, the term "integrated circuit component" refers to a packaged or unpacked integrated circuit product. A packaged integrated circuit component comprises one or more integrated circuit dies mounted on a package substrate with the integrated circuit dies and package substrate encapsulated in a casing material, such as a metal, plastic, glass, or ceramic. In one example, a packaged integrated circuit component contains one or more processor units mounted on a substrate with an exterior surface of the substrate comprising a solder ball grid array (BGA). In one example of an unpackaged integrated circuit component, a single monolithic integrated circuit die comprises solder bumps attached to contacts on the die. The solder bumps allow the die to be directly attached to a printed circuit board. An integrated circuit component can comprise one or more of any computing system components described or referenced herein or any other computing system component, such as a processor unit (e.g., system-on-a-chip (SoC), processor core, graphics processor unit (GPU), accelerator, chipset processor), I/O controller, memory, or network interface controller.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the software or firmware instructions are not actively being executed by the system, device, platform, or resource.

Reference is now made to the drawings, which are not necessarily drawn to scale, wherein similar or same numbers may be used to designate same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present document.

In the following description, for purposes of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof. The intention is to cover all modifications, equivalents, and alternatives within the scope of the claims.

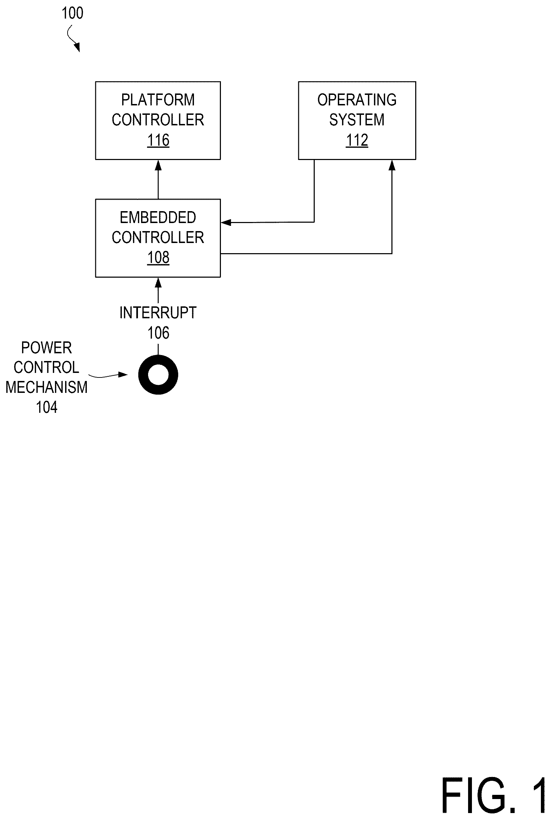

FIG. 1 illustrates components that enable secure power cycling in a headed computing system. The components 100 comprise a power control mechanism 104, an embedded controller 108, an operating system 112, and a platform controller 116. As used herein, the term "headed computing system" refers to any login-enabled computing system comprising input and output devices (e.g., a display and one or more input devices, such as a keyboard, touchscreen, and/or mouse) that allows a user to log into and interact with the system. That is, the headed computing system is one that requires authentication of a user (by, for example, password verification or facial recognition) for the user to be able to use the system. Examples of headed computing systems include personal computers, workstations, laptops, smartphones, tablets, and home security systems with integrated displays.

The power control mechanism 104 can be a button, switch, or other suitable mechanical mechanism that causes the headed computing system to transition between power states, such as between an active state (any state in which the headed computing system is consuming power) and an off state (in which the headed computing system is not consuming power). If the headed computing system is in an active state, operation of the power control mechanism 104 can cause the computing system to transition from a first power state to a second power state that is a lower power state than the first power state. The first power state can be a working state (e.g., S0 Advanced Configuration and Power Interface (ACPI) state), a sleep/standby state (e.g., S1, S2, S3 ACPI states), hibernation state (S4 ACPI state), or another state in which the headed computing system is consuming power, and the second state can be any of these states in addition to a fully off or mechanical off state (e.g., G3 ACPI state). Typically, operating the power control mechanism of a headed computing system operating in an active state causes the system to fully power down. However, in some embodiments, operating the power control mechanism can cause a computing system to transition from a working state to a sleep, standby, or hibernation state, or cause the system to reboot.

Reference herein to operating a power control mechanism can refer to pressing a power button, toggling a power switch, or manipulating any mechanical mechanism to cause a computing system to transition to a lower power state. In some computing systems having a power button, the power button is to be held for a sufficient length of time (e.g., five seconds, ten seconds) before the computing system transitions to a lower power state.

The embedded controller 108 controls the transition of the headed computing system between power states. The embedded controller 108 can cause a powered-up headed computing system to transition to a lower power in response to receiving an interrupt 106 from the power control mechanism 104 when the power control mechanism 104 has been operated. The embedded controller 108 can be an integrated circuit component that is separate from the one or more integrated circuit components that execute the operating system 112. In some embodiments, the embedded controller 108 can comprise Chrome OS embedded controller firmware (cros_ec). In other embodiments, a component other than an embedded controller can receive interrupts from a power control mechanism and control transition of a headed computing system between power states.

The secure power cycling enabled by the components 100 allows a headed computing system comprising the components 100 to transition to a lower power state only if a user is logged into the headed computing system. In response to receiving an interrupt 106, the embedded controller 108 sends a request to the operating system 112 for the operating system 112 to respond with information indicating whether a user is logged into the headed computing system. If a user is logged into the headed computing system, the embedded controller 108 causes the headed computing system to transition from its present power state to a lower power state. In FIG. 1, the embedded controller 108 causes the power state transition to occur by sending appropriate instructions to a platform controller 116. In other embodiments, the embedded controller 108 causes the headed computing system to transition to a lower power state by sending appropriate instructions to one or more of a platform controller (e.g., platform controller 116), operating system (e.g., operating system 112) and other components of the headed computing system. If a user is not logged into the computing system, the embedded controller 108 does not cause the headless computing system to transition to a lower power state. That is, the embedded controller keeps the computing system in its current power state.

In other embodiments, a component other than the embedded controller can query the operating system whether a user is logged into the computing system and receive an indication of whether a user is logged into or not logged into the computing system.

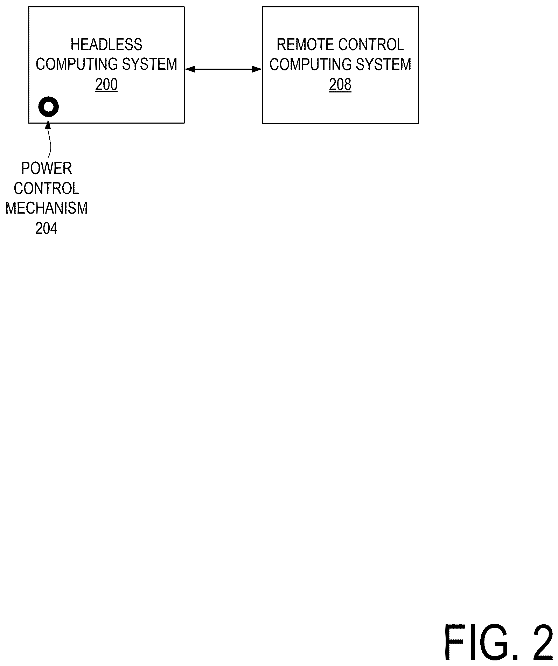

FIG. 2 illustrates a headless system with remote control-enabled secure power cycling. FIG. 2 illustrates a headless computing system 200 capable of communicating with a remote control computing system 208. As used herein, the phrase "headless computing system" refers to computing systems that do not allow a user to log into the computing system. Typically, headless computing systems do not include input and output devices (such as a display, keyboard, touchscreen, or mouse) that allow a user to interact as they would with a headed computing system. However, in some embodiments, headless computing systems can comprise input and output devices such as buttons, switches, indicator lights, and integrated displays (that are typically smaller than laptop displays or personal computer monitors). Examples of headless computing systems include data center computing systems (e.g., rack-mounted servers, blade servers, hyper-converged infrastructure (HCI) nodes, disaggregated nodes (systems that comprise either compute, storage, or networking resources)), industrial personal computers, and network security devices (e.g., firewalls, load balancers). The headless computing system 200 comprises a power control mechanism 204.

Secure power cycling of the headless computing system 200 is enabled by the headless computing system 200 communicating with the remote control computing system 208 and having the remote control computing system 208 attempt to authenticate a user of the remote control computing system 208. For example, in response to the headless computing system 200 receiving an indication of an operation of the power control mechanism 204, the headless computing system 200 can send a request to the remote control computing system 208 to have the remote control computing system 208 authenticate a user of the remote control computing system 208. In some embodiments, the headless computing system 200 can send to the remote control computing system 208 information indicating that a power control mechanism of the headless computing system has been pressed. In either case, in response to receiving the request or the information from the headless computing system 200, the remote control computing system 208 can attempt to verify the identity of a user of the remote control computing system 208 via password verification or biometric verification. Password verification can comprise prompting the user for a password and comparing the provided password against a database storing passwords associated with users authorized to allow operation of the power control mechanism of the headless computing system.

Biometric verification can comprise, for example, capturing a biometric identifier (e.g., fingerprint image, facial image, voice sample, iris image, retinal image) of a user and comparing the captured biometric identifier against a database storing biometric identifiers associated with users authorized to allow power cycling of the headless computing system. Authentication of a user via biometric verification can employ the use of an input device of the remote control computing system (e.g., camera, microphone) or a dedicated biometric sensor such as a fingerprint reader or retinal scanner. A biometric sensor can be integrated into or be a peripheral of the remote control computing system 208. If a provided password or captured biometric identifier matches a password or biometric identifier stored in the database of authorized users, the user of the remote control computing system 208 is authenticated and the operation of the power control mechanism 204 is authorized.

After attempting to authenticate a user, the remote control computing system 208 can send information indicating that the operation of the power control mechanism 204 is authorized. This information can comprise information indicating whether the user of the remote control computing system 208 has been authenticated. If the operation of the power control mechanism 204 is authorized, the headless computing system 200 transitions to a lower power state. If the operation of the power control mechanism 204 is not authorized, the headless computing system 200 is kept in its current power state.

If the headless computing system 200 is unresponsive at the time the power control mechanism is operated, the headless computing system 200 transitions to a lower power state without performing user authentication. The conditions under which a computing system can be considered to be unresponsive are discussed in greater detail below.

The headless computing system 200 can be in communication with the remote control computing system 208 over one or more networks. In some embodiments, the remote control computing system 208 can be a personal computing system located in the same building (e.g., data center, factory) as the headless computing system 200. In other embodiments, the remote control computing system 208 can be in a separate building from the one in which the headless computing system 200 is located. In some embodiments, the remote control computing system 208 is a mobile computing device (such as a laptop computer, smartphone, or tablet) that is local to the headless computing system 200. In such cases, the headless computing system 200 and the remote control computing system 208 can communicate over a Wi-Fi, Bluetooth, Zigbee, or other suitable network connection.

In some embodiments, the remote control computing system 208 is part of a cloud-based management system, such as an orchestration system that manages computing systems in one or more data centers, or that manages a fleet of computing systems or devices deployed to an organization's employees.

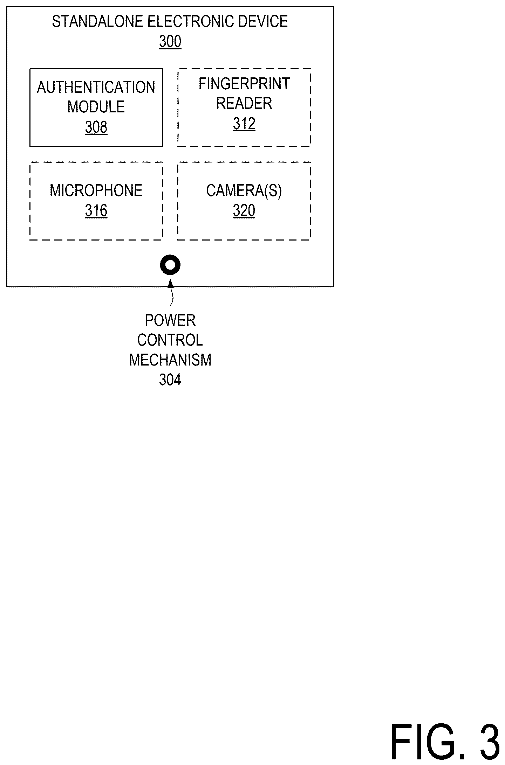

FIG. 3 is a block diagram of a first example standalone electronic device having secure power cycling capabilities. FIG. 3 illustrates a standalone electronic device 300 comprising a power control mechanism 304 and an authentication module 308. As used herein, the phrase "standalone electronic device" refers to an electronic device that authenticates the user operating the power control mechanism. Standalone electronic devices include electronic devices that do not possess network communication capabilities. Some standalone electronic devices possess network communication capabilities but do not rely upon those capabilities to perform user authentication. Examples of standalone electronic devices include smartphones, medical equipment (e.g., ventilators, respiratory support devices, intravenous and infusion equipment), standalone servers, digital cameras, and standalone industrial controllers.

In response to receiving an indication that the power control mechanism 304 has been operated, the authentication module 308 attempts to verify the identity of the user operating the power control mechanism 304. The standalone electronic device 300 can verify the identity of the user operating the power control mechanism 304 via password verification or biometric verification. Password verification of a user of the remote control computing system 208 can comprise prompting the user for a password (which could be entered by, for example, a touchscreen, built-in keypad, or built-in keyboard) and comparing the password provided by the user against a database comprising passwords associated with users authorized to power down the standalone electronic device 300. The standalone electronic device 300 can perform biometric verification via any of the biometric verification approaches described above in regard to FIG. 2. In some embodiments, the biometric sensor or input device used for biometric verification (e.g., fingerprint reader 312, microphone 316, and camera(s) 320) can be integrated into or be a peripheral of the standalone electronic device 300.

If the identity of the user of the standalone electronic device 300 is verified, operation of the power control mechanism 304 is authorized, and the standalone electronic device 300 transitions from a first power state to a second power state that is a lower power state than the first power state. If the identity of the user of standalone electronic device 300 is not verified, the operation of the power control mechanism 304 is not authorized, and the standalone electronic device does not transition to a lower power state.

If the standalone electronic device 300 is unresponsive at the time power control mechanism 304 is operated, the standalone electronic device 300 transitions to a lower power state without performing user authentication.

Nonresponsive headless computing systems (or standalone electronic devices) can be nonresponsive in that, for example, the computing system does not respond or does not respond as expected to operation of input devices (e.g., keyboards, mouse, keypads, switches, and buttons (other than power buttons and power switches)), is in an error state, displays an error code, or is otherwise in a "hung" or "frozen" state. In some embodiments, a computing system can determine that it is not responsive by a power cycle control circuit of the computing system (e.g., embedded controller 108) determining that the computing system has not provided an expected periodic signal (e.g., a clock signal transition, a periodic interrupt indicating that the standalone electronic device is responsive) to the power cycle control circuit. In other embodiments, a computing system can determine that it is not responsive by a power cycle control circuit requesting information indicating a responsiveness of the computing system to another component of the computing system and the other component of the computing system sending information to the power cycle control circuit indicating that the computing system is nonresponsive, which can include the other component of the computing system timing out (not sending the response within an expected amount of time).

Embodiments in which a computing system allows a user to power down and restart the computing system when the computing system is nonresponsive can be advantageous in emergency situations. For example, if a medical device providing life-sustaining services is suddenly nonresponsive and stops working as intended, a patient's health may be at risk and quick rebooting of the medical device may be required. If the medical device typically requires user authentication before the medical device powers down, allowing any user to reboot the medical device in an emergency situation may save a patient's life.

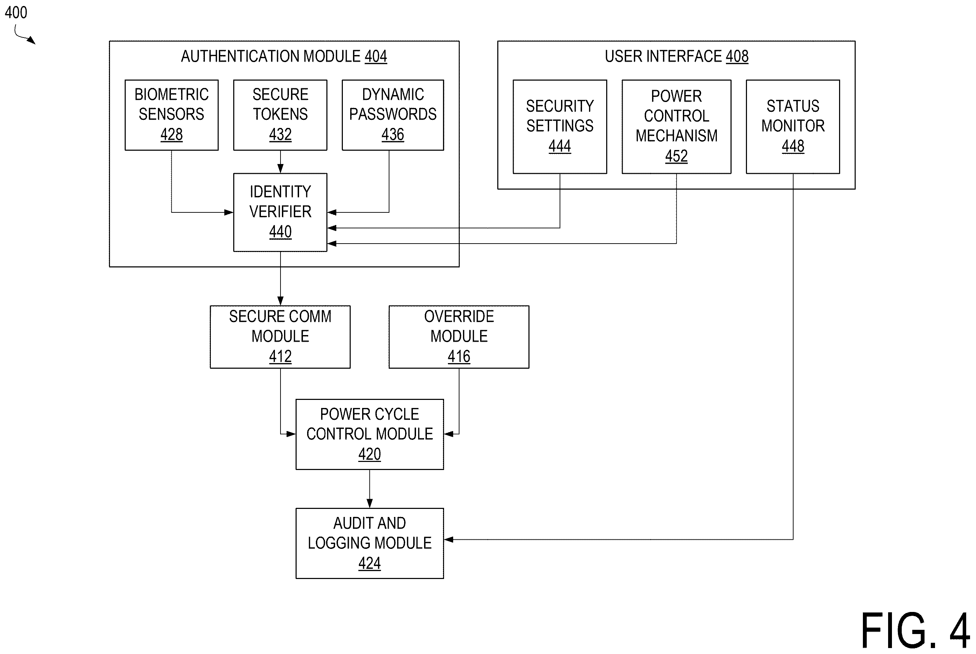

FIG. 4 is a block diagram of a second example standalone electronic device with secure power cycling capabilities. FIG. 4 comprises an authentication module 404, a user interface 408, a secure communication module 412, an override module 416, a power cycle control module 420, and an audit and logging module 424. The authentication module 404 verifies an identity of a user at the standalone electronic device 400. The authentication module 404 can utilize biometric sensors 428 (including one or more of any of the biometric sensors described herein), secure tokens 432, or dynamic passwords 436 to verify the identity of the user with the identity verifier 440. In some embodiments, a secure token may have been issued to a user and the user provides the secure token to the standalone electronic device 400 (by, for example, wirelessly transmitting the secure token from the user's smartphone to the standalone computing device) for authentication after operating the power control mechanism 452 of the standalone electronic device 400. The dynamic passwords 436 can be one-time passwords, time-based one-time passwords, or passwords generated by a physical device (e.g., key fobs, smart cards, USB (Universal Serial Bus) security keys)).

The user interface 408 allows standalone electronic device users and administrators to interact with the standalone electronic device 400. The user interface 408 can comprise a hardware interface (e.g., buttons, switches) as well as a graphical user interface. The user interface 408 comprises a security settings interface 444 that allows a user to configure security settings (such as whether single-factor or multi-factor authentication is to be used for user authentication and which verification modes (e.g., password, fingerprint) are to be used in the verification, a system monitor 448 for monitoring the status of the standalone electronic device 400, and a power control mechanism 452 for turning the standalone electronic device 400 on or off or otherwise causing the standalone electronic device 400 to transition between power states.

The identity verifier 440 of the authentication module 404 verifies the identity of a user at the standalone electronic device 400, based on input from the power control mechanism 452 (e.g., an interrupt indicating that the power control mechanism has been operated), the security settings interface 444, and the biometric sensors 428, secure tokens 432, and/or dynamic passwords 436 (depending on which authentication mode(s) are being used for user identity verification).

The secure communication module 412 ensures that communication between the authentication module 404 and the power cycle control module 420 is encrypted. The override module 416 can determine if the standalone electronic device 400 is nonresponsive and send information indicating that the standalone electronic device 400 is nonresponsive to the power cycle control module 420. The power cycle control module 420 manages the transition of the standalone electronic device 400 between power states and interfaces with hardware components of the standalone electronic device 400. The power cycle control module 420 can cause the standalone electronic device 400 to transition between power states in response to receiving information from the authentication module 404 indicating that the identity of the user at the standalone electronic device 400. In some embodiments, the power cycle control module 420 is an embedded controller (e.g., embedded controller 108). If information received at the power cycle control module 420 from the override module 416 indicates that the standalone electronic device 400 is nonresponsive, the power cycle control module 420 can cause the standalone electronic device 400 to transition between power states without user authentication. In some embodiments, a power cycle control module 420 can implement machine learning algorithms to predict and detect unauthorized access attempts based on behavioral patterns.

The audit and logging module 424 logs power state transition activities. The audit and logging module 424 can further audit the power state transition history to provide insights into power state initiation activity, allowing organizations to proactively manage threats and refine their security strategies based on empirical data. By providing detailed logs and secure management of power transitions, the secure power cycling technologies disclosed herein can assist organizations in complying with international security standards and regulations regarding data security and privacy.

In some embodiments, a power control mechanism can be a "soft" power control mechanism, such as a graphical user interface element (e.g., icon, drop-down menu) selectable by, for example, a mouse-controller cursor; by touch, if the GUI element is displayed on a touch-enabled display.

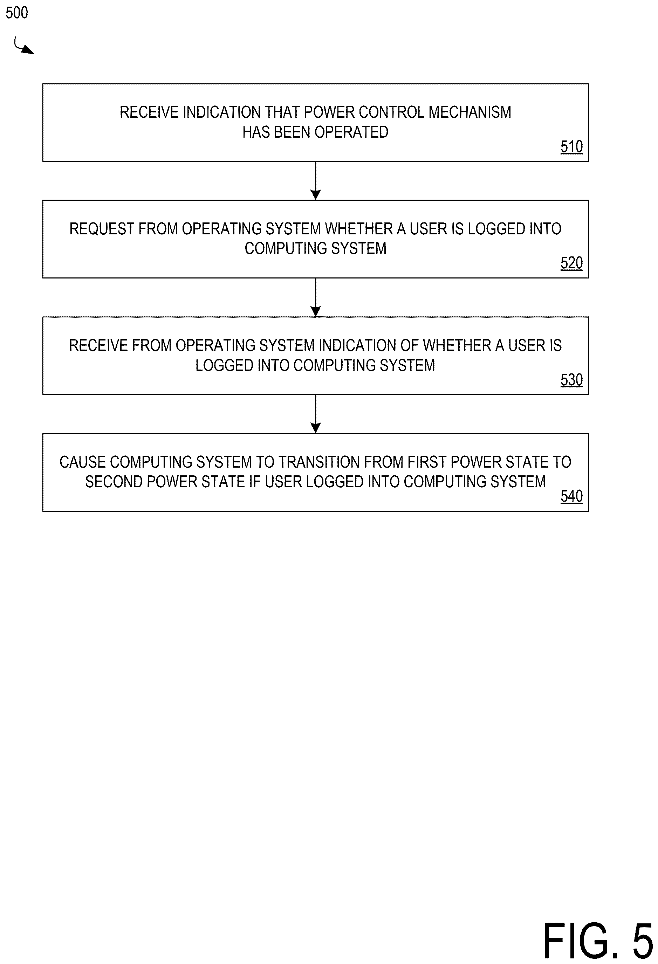

FIG. 5 is a first secure power cycling method comprises the method 500 can performed by, for example, a laptop computer. At stage 510, a first integrated circuit component of a computing system receives an indication that a power control mechanism of the computing system has been operated, the first integrated circuit component separate from one or more second integrated circuit components of the computing system upon which an operating system is executing. At stage 520, responsive to receiving the indication that the power control mechanism has been operated, whether a user is logged into the computing system is requested from the operating system. At stage 530, an indication of whether a user is logged into the computing system is received from the operating system. At stage 540, the computing system is caused to transition from a first power state to a second power state that is a lower power state than the first power state if a user is logged into the computing system. In other embodiments, the method 500 can comprise one or more additional elements. For example, the method 500 can further comprise keeping the computing system in the first power state if a user is not logged into the computing system.

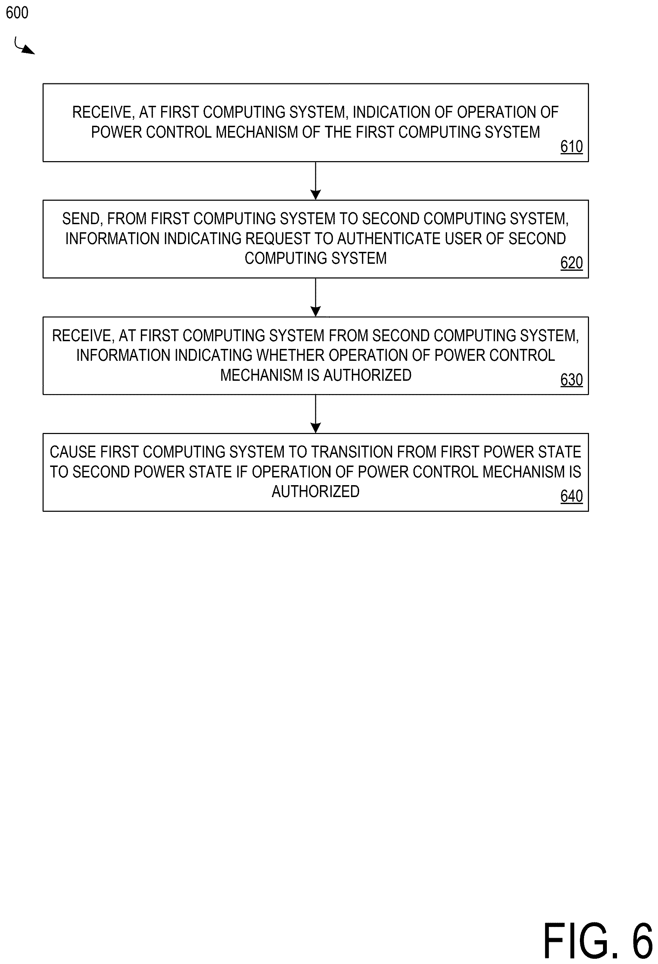

FIG. 6 is a second secure power cycling method comprises the method 600 can be performed by, for example, a headless server. At stage 610, at a first computing system, an indication of an operation of a power control mechanism of the first computing system is received, wherein the first computing system is headless. At stage 620, responsive to receiving the indication of the operation of the power control mechanism of the first computing system, information indicating a request to have the second computing system authenticate a user of the second computing system. At stage 630, information indicating whether operation of the power control mechanism is authorized is received at the first computing system from the second computing system. At stage 640, the first computing system is caused to transition from a first power state to a second power state that is a lower power state than the first power state if the operation of the power control mechanism is authorized. In other embodiments, the method 600 can comprise one or more additional elements. For example, the method 600 can further comprise keeping the first computing system in the first power state if the operation of the power control mechanism of the first computing system is not authorized.

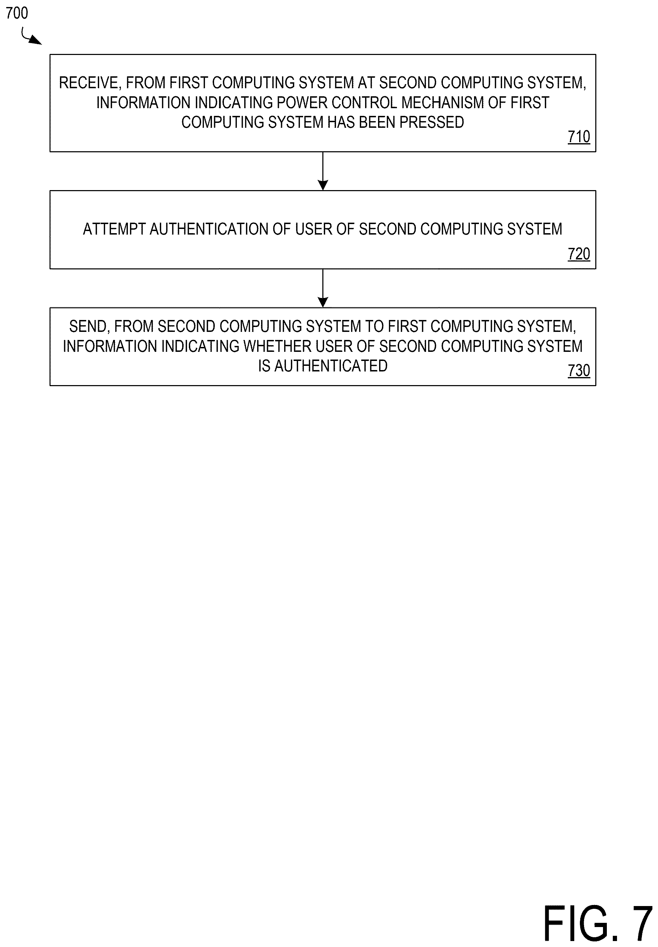

FIG. 7 is a third secure power cycling method comprises the method 700 can be performed by, for example, a computing system that remotely controls a headless computing system by authenticating operation of a power control mechanism of the headless computing system. At stage 710, information indicating a power control mechanism of the first computing system has been pressed is received from a first computing system at a second computing system. At stage 720, authentication of the user of the second computing system is attempted is response to receiving information indicating a power control mechanism of the first computing system has been pressed. At stage 730, information indicating whether the operation of the power control mechanism is authorized is sent from the second computing system to the first computing system.

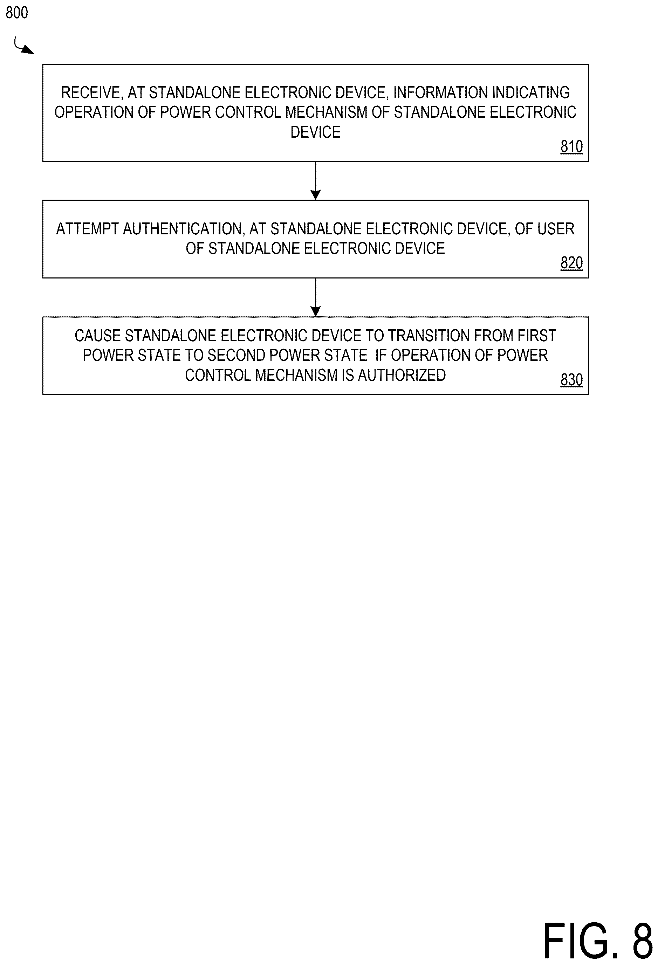

FIG. 8 is a fourth secure power cycling method comprises the method 800 can be performed by, for example a standalone device, such as an industrial control computing system. At stage 810, information indicating an operation of a power control mechanism of the standalone electronic device is received at a standalone electronic device. At stage 820, authentication of the user of the standalone computing system is attempted at the standalone electronic device. At stage 830, the standalone electronic device is caused to transition from a first power state to a second power state that is a lower power state than the first power state if the operation of the power control mechanism is authorized. In other embodiments, the method 800 can comprise one or more additional elements. For example, the method 800 can further comprise determining that the standalone electronic device is nonresponsive; and causing the standalone electronic device to transition from the first power state to the second power state in response to determining that the standalone electronic device is nonresponse and receiving the information indicating the operation of the power control mechanism.

As used herein, the term "module" refers to logic that may be implemented in a hardware component or device, software or firmware running on a processor unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processor units, state machine circuitry, and/or firmware that stores instructions executable by programmable circuitry. Modules described herein may, collectively or individually, be embodied as circuitry that forms a part of a computing system. Thus, any of the modules can be implemented as circuitry, such as authentication circuitry, override circuitry, power cycle control circuitry, and audit and logging circuitry. A computing system referred to as being programmed to perform a method can be programmed to perform the method via software, hardware, firmware, or combinations thereof.

The technologies described herein can be performed by or implemented in any of a variety of computing systems and electronic devices, including mobile computing systems (e.g., smartphones, handheld computers, tablet computers, laptop computers, portable gaming consoles, portable cameras), non-mobile computing systems (e.g., desktop computers, servers, workstations, stationary gaming consoles, set-top boxes, smart televisions, rack-level computing solutions (e.g., blade, tray, or sled computing systems), industrial controllers, security cameras), embedded computing systems (e.g., computing systems that are part of a vehicle, smart home appliance, consumer electronics product or equipment, manufacturing equipment), and Internet of Things (IoT) devices (e.g., smart thermostats, smart lights, smart home appliances, smart speakers, home security system components, wearable devices, in-vehicle infotainment systems, connected healthcare devices). For the purposes of this application, the terms "computing systems" and "electronic devices" are interchangeable.

As used herein, the term "computing system" includes computing devices and includes systems comprising multiple discrete physical components. In some embodiments, the computing systems are located in a data center, such as an enterprise data center (e.g., a data center owned and operated by a company and typically located on company premises), managed services data center (e.g., a data center managed by a third party on behalf of a company), a colocated data center (e.g., a data center in which data center infrastructure is provided by the data center host and a company provides and manages their own data center components (servers, etc.)), cloud data center (e.g., a data center operated by a cloud services provider that hosts companies' applications and data), or an edge data center (e.g., a data center typically having a smaller footprint than other data center types, located close to the geographic area that it serves).

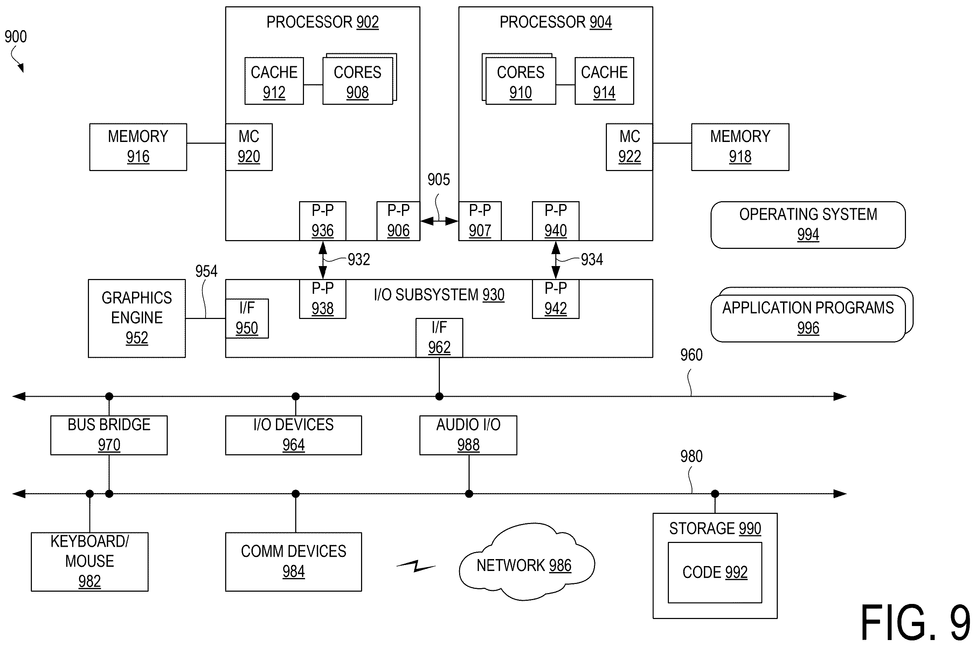

FIG. 9 is a block diagram of an example computing system in which the secure power cycling technologies described herein may be implemented . Generally, components shown in FIG. 9 can communicate with other shown components, although not all connections are shown, for ease of illustration. The computing system 900 is a multiprocessor system comprising first processor unit 902 and second processor unit 904 comprising point-to-point (P-P) interconnects. A point-to-point (P-P) interface 906 of the first processor unit 902 is coupled to a point-to-point interface 907 of the second processor unit 904 via a point-to-point interconnection 905. It is to be understood that any or all of the point-to-point interconnects illustrated in FIG. 9 can be alternatively implemented as a multi-drop bus, and that any or all buses illustrated in FIG. 9 could be replaced by point-to-point interconnects.

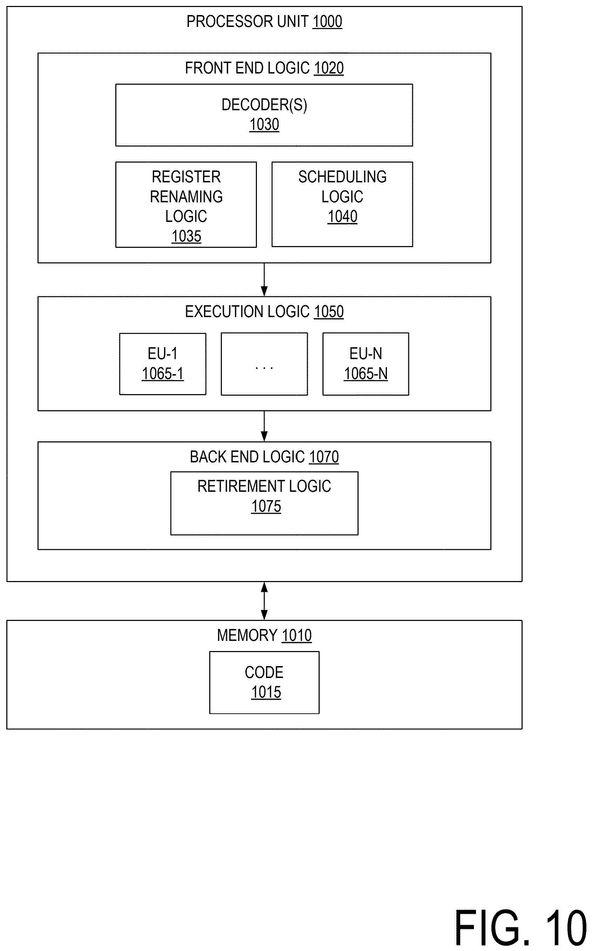

The first processor unit 902 and second processor unit 904 comprise multiple processor cores. The first processor unit 902 comprises processor cores 908 and the second processor unit 904 comprises processor cores 910. Processor cores 908 and 910 can execute computer-executable instructions in a manner similar to that discussed below in connection with FIG. 10, or other manners.

The first processor unit 902 and the second processor unit 904 further comprise cache memories 912 and 914, respectively. The cache memories 912 and 914 can store data (e.g., instructions) utilized by one or more components of the first processor unit 902 and the second processor unit 904, such as the processor cores 908 and 910. The cache memories 912 and 914 can be part of a memory hierarchy for the computing system 900. For example, the cache memories 912 can locally store data that is also stored in a first memory 916 to allow for faster access to the data by the first processor unit 902. In some embodiments, the cache memories 912 and 914 can comprise multiple cache memories that are a part of a memory hierarchy. The cache memories in the memory hierarchy can be at different cache memory levels, such as level 1 (L1), level 2 (L2), level 3 (L3), level 4 (L4), or other cache memory levels. In some embodiments, one or more levels of cache memory (e.g., L2, L3, L4) can be shared among multiple cores in a processor unit or among multiple processor units in an integrated circuit component. In some embodiments, the last level of cache memory in an integrated circuit component can be referred to as a last-level cache (LLC). One or more of the higher levels of cache levels (the smaller and faster cache memories) in the memory hierarchy can be located on the same integrated circuit die as a processor core and one or more of the lower cache levels (the larger and slower caches) can be located on one or more integrated circuit dies that are physically separate from the processor core integrated circuit dies.

Although the computing system 900 is shown with two processor units, the computing system 900 can comprise any number of processor units. Further, a processor unit can comprise any number of processor cores. A processor unit can take various forms such as a central processing unit (CPU), graphics processing unit (GPU), general-purpose GPU (GPGPU), accelerated processing unit (APU), field-programmable gate array (FPGA), neural network processing unit (NPU), data processor unit (DPU), accelerator (e.g., graphics accelerator, digital signal processor (DSP), compression accelerator, artificial intelligence (AI) accelerator), controller, or other type of processing unit. As such, the processor unit can be referred to as an XPU (or xPU). Further, a processor unit can comprise one or more of these various types of processing units. In some embodiments, the computing system comprises one processor unit with multiple cores, and in other embodiments, the computing system comprises a single processor unit with a single core. As used herein, the terms "processor unit" and "processing unit" can refer to any processor, processor core, component, module, engine, circuitry, or any other processing element described or referenced herein.

In some embodiments, the computing system 900 can comprise one or more processor units that are heterogeneous or asymmetric to another processor unit in the computing system. There can be a variety of differences between the processing units in a system in terms of a spectrum of metrics of merit including architectural, microarchitectural, thermal, power consumption characteristics, and the like. These differences can effectively manifest themselves as asymmetry and heterogeneity among the processor units in a system.

The first processor unit 902 and the second processor unit 904 can be located in a single integrated circuit component (such as a multi-chip package (MCP) or multi-chip module (MCM)) or they can be located in separate integrated circuit components. An integrated circuit component comprising one or more processor units can comprise additional components, such as embedded DRAM, stacked high bandwidth memory (HBM), shared cache memories (e.g., L3, L4, LLC), input/output (I/O) controllers, or memory controllers. Any of the additional components can be located on the same integrated circuit die as a processor unit, or on one or more integrated circuit dies separate from any integrated circuit die containing a processor unit. In some embodiments, where there is heterogeneity or asymmetry among processor units in a computing system, the heterogeneity or asymmetric can be among processor units located in the same integrated circuit component.

The first processor unit 902 further comprises first memory controller logic (first MC 920) and the second processor unit 904 further comprises second memory controller logic (second MC 922). As shown in FIG. 9, a first memory 916 coupled to the first processor unit 902 is controlled by the first MC 920 and a second memory 918 coupled to the second processor unit 904 is controlled by the second MC 922. The first memory 916 and the second memory 918 can comprise various types of volatile memory (e.g., dynamic random-access memory (DRAM), static random-access memory (SRAM)) and/or non-volatile memory (e.g., flash memory, chalcogenide-based phase-change non-volatile memories). The first memory 916 and the second memory 918 can comprise one or more layers of a memory hierarchy of the computing system. While first MC 920 and second MC 922 are illustrated as being integrated into the first processor unit 902 and the second processor unit 904, in alternative embodiments, memory controller logic can be external to a processor unit.

The first processor unit 902 and the second processor unit 904 are coupled to an Input/Output subsystem 930 (I/O subsystem) via point-to-point interconnections 932 and 934. The point-to-point interconnection 932 connects a point-to-point interface 936 of the first processor unit 902 with a point-to-point interface 938 of the Input/Output subsystem 930, and the point-to-point interconnection 934 connects a point-to-point interface 940 of the second processor unit 904 with a point-to-point interface 942 of the Input/Output subsystem 930. Input/Output subsystem 930 further includes an interface 950 to couple the Input/Output subsystem 930 to a graphics engine 952. The Input/Output subsystem 930 and the graphics engine 952 are coupled via a bus 954.

The Input/Output subsystem 930 is further coupled to a first bus 960 via an interface 962. The first bus 960 can be a Peripheral Component Interconnect Express (PCIe) bus or any other type of bus. Various I/O devices 964 can be coupled to the first bus 960. A bus bridge 970 can couple the first bus 960 to a second bus 980. In some embodiments, the second bus 980 can be a low pin count (LPC) bus. Various devices can be coupled to the second bus 980 including, for example, a keyboard/mouse 982, audio I/O devices 988, and a storage device 990, such as a hard disk drive, solid-state drive, or another storage device for storing computer-executable instructions (or code 992) or data. The code 992 can comprise computer-executable instructions for performing methods described herein. Additional components that can be coupled to the second bus 980 include one or more communication devices 984, which can provide for communication between the computing system 900 and one or more wired or wireless networks 986 (e.g. Wi-Fi, cellular, or satellite networks) via one or more wired or wireless communication links (e.g., wire, cable, Ethernet connection, radio-frequency (RF) channel, infrared channel, Wi-Fi channel) using one or more communication standards (e.g., IEEE 502.11 standard and its supplements).

In embodiments where the one or more communication devices 984 support wireless communication, the one or more communication devices 984 can comprise wireless communication components coupled to one or more antennas to support communication between the computing system 900 and external devices. The wireless communication components can support various wireless communication protocols and technologies such as Near Field Communication (NFC), IEEE 1002.11 (Wi-Fi) variants, WiMax, Bluetooth, Zigbee, 4G Long Term Evolution (LTE), Code Division Multiplexing Access (CDMA), Universal Mobile Telecommunication System (UMTS) and Global System for Mobile Telecommunication (GSM), and 5G broadband cellular technologies. In addition, the wireless modems can support communication with one or more cellular networks for data and voice communications within a single cellular network, between cellular networks, or between the computing system and a public switched telephone network (PSTN).

The computing system 900 can comprise removable memory such as flash memory cards (e.g., SD (Secure Digital) cards), memory sticks, Subscriber Identity Module (SIM) cards). The memory in computing system 900 (including cache memories 912 and 914, first memory 916, second memory 918, and storage device 990) can store data and/or computer-executable instructions for executing an operating system 994 and application programs 996. Example data includes images, sound files, video data, or other data sets to be sent to and/or received from one or more network servers or other devices by the computing system 900 via the one or more wired or wireless networks 986, or for use by the computing system 900. The computing system 900 can also have access to external memory or storage (not shown) such as external hard drives or cloud-based storage.

The operating system 994 can control the allocation and usage of the components illustrated in FIG. 9 and support the application programs 996. The application programs 996 can include common computing system applications (e.g., email applications, calendars, contact managers, web browsers, messaging applications) as well as other computing applications, such as applications that authenticate a user's identity and cause a biometric identifier to be captured.

The computing system 900 can support various additional input devices, such as a touchscreen, microphone, monoscopic camera, stereoscopic camera, trackball, touchpad, trackpad, proximity sensor, light sensor, electrocardiogram (ECG) sensor, fingerprint reader, iris camera, retinal camera, and one or more output devices, such as one or more speakers or displays. Any of the input or output devices can be internal to, external to, or removably attachable with the computing system 900. External input and output devices can communicate with the computing system 900 via wired or wireless connections.

The computing system 900 can further include at least one input/output port comprising physical connectors (e.g., USB, FireWire, Ethernet, RS-232), a power supply (e.g., battery), and global satellite navigation system (GNSS) receiver (e.g., GPS receiver). A GNSS receiver can be coupled to a GNSS antenna. The computing system 900 can further comprise one or more additional antennas coupled to one or more additional receivers, transmitters, and/or transceivers to enable additional functions.

It is to be understood that FIG. 9 illustrates only one example computing system architecture. Computing systems based on alternative architectures can be used to implement technologies described herein. For example, instead of the first processor unit 902, the second processor unit 904, and the graphics engine 952 being located on discrete integrated circuit dies, a computing system can comprise an SoC (system-on-a-chip) integrated circuit die on which multiple processors, a graphics engine, and additional components are incorporated. Further, a computing system can connect its constituent component via bus or point-to-point configurations different from that shown in FIG. 9. Moreover, the illustrated components in FIG. 9 are not required or all-inclusive, as shown components can be removed and other components added in alternative embodiments.

FIG. 10 is a block diagram of an example processor unit to execute computer-executable instructions as part of implementing technologies described herein. The processor unit 1000 can be a single-threaded core or a multithreaded core in that it may include more than one hardware thread context (or "logical processor") per processor unit.

FIG. 10 also illustrates a memory 1010 coupled to the processor unit 1000. The memory 1010 can be any memory described herein or any other memory known to those of skill in the art. The memory 1010 can store computer-executable instructions 1015 (code) executable by the processor unit 1000.

The processor unit comprises front-end logic 1020 that receives instructions from the memory 1010. An instruction can be processed by one or more decoders 1030. The one or more decoders 1030 can generate as its output a micro-operation such as a fixed width micro-operation in a predefined format, or generate other instructions, microinstructions, or control signals, which reflect the original code instruction. The front-end logic 1020 further comprises register renaming logic 1035 and scheduling logic 1040, which generally allocate resources and queues operations corresponding to converting an instruction for execution.

The processor unit 1000 further comprises execution logic 1050, which comprises one or more execution units (EUs) (execution unit 1065-1 through execution unit 1065-N). Some processor unit embodiments can include a number of execution units dedicated to specific functions or sets of functions. Other embodiments can include only one execution unit or one execution unit that can perform a particular function. The execution logic 1050 performs the operations specified by code instructions. After completion of execution of the operations specified by the code instructions, back-end logic 1070 retires instructions using retirement logic 1075. In some embodiments, the processor unit 1000 allows out of order execution but requires in-order retirement of instructions. Retirement logic 1075 can take a variety of forms as known to those of skill in the art (e.g., re-order buffers or the like).

The processor unit 1000 is transformed during execution of instructions, at least in terms of the output generated by the one or more decoders 1030, hardware registers and tables utilized by the register renaming logic 1035, and any registers (not shown) modified by the execution logic 1050.

Any of the disclosed methods (or a portion thereof) can be implemented as computer-executable instructions or a computer program product. Such instructions can cause a computing system or one or more processor units capable of executing computer-executable instructions to perform any of the disclosed methods. As used herein, the term "computer" refers to any computing system, device, or machine described or mentioned herein as well as any other computing system, device, or machine capable of executing instructions. Thus, the term "computer-executable instruction" refers to instructions that can be executed by any computing system, device, or machine described or mentioned herein as well as any other computing system, device, or machine capable of executing instructions.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some embodiments, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of" can mean any combination of the listed terms. For example, the phrase "one or more of A, B and C" can mean A; B; C; A and B; A and C; B and C; or A, B, and C.

As used in this application and the claims, the phrase "individual of" or "respective of" following by a list of items recited or stated as having a trait, feature, etc. means that all of the items in the list possess the stated or recited trait, feature, etc. For example, the phrase "individual of A, B, or C, comprise a sidewall" or "respective of A, B, or C, comprise a sidewall" means that A comprises a sidewall, B comprises sidewall, and C comprises a sidewall.

The disclosed methods, apparatuses, and systems are not to be construed as limiting in any way. Instead, the present disclosure is directed toward all novel and nonobvious features and aspects of the various disclosed embodiments, alone and in various combinations and subcombinations with one another. The disclosed methods, apparatuses, and systems are not limited to any specific aspect or feature or combination thereof, nor do the disclosed embodiments require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

The following examples pertain to additional embodiments of technologies disclosed herein.

Example 1 comprises a method comprising: receiving, at a first integrated circuit component of a computing system, an indication that a power control mechanism of the computing system has been operated, the first integrated circuit component separate from one or more second integrated circuit components of the computing system upon which an operating system is executing; responsive to receiving the indication that the power control mechanism has been operated, requesting, from the operating system, whether a user is logged into the computing system; receiving, from the operating system, an indication of whether a user is logged into the computing system; and causing the computing system to transition from a first power state to a second power state that is a lower power state than the first power state if a user is logged into the computing system.

Example 2 comprises the method of Example 1, further comprising keeping the computing system in the first power state if a user is not logged into the computing system.

Example 3 comprises the method of Example 1 or 2, wherein the indication that the power control mechanism of the computing system has been operated comprises the first integrated circuit component receiving an interrupt indicating that the power control mechanism has been operated.

Example 4 comprises the method of any one of Examples 1-3, wherein the power control mechanism is a power button and the indication that a power control mechanism has been operated indicates that the power button has been pressed.

Example 5 comprises the method of any one of Examples 1-3, wherein the power control mechanism is a power switch and the indication that a power control mechanism has been operated indicates that the power switch has been toggled.

Example 6 comprises a method comprising: receiving, at a first computing system, an indication of an operation of a power control mechanism of the first computing system, wherein the first computing system is headless; responsive to receiving the indication of the operation of the power control mechanism of the first computing system, sending, from the first computing system to a second computing system, information indicating a request to have the second computing system authenticate a user of the second computing system; receiving, at the first computing system from the second computing system, information indicating whether operation of the power control mechanism is authorized; and causing the first computing system to transition from a first power state to a second power state that is a lower power state than the first power state if the operation of the power control mechanism is authorized.

Example 7 comprises the method of Example 6, wherein the information indicating whether operation of the power control mechanism is authorized comprises information indicating authentication of the second computing system.

Example 8 comprises the method of Example 6 or 7, further comprising keeping the first computing system in the first power state if the operation of the power control mechanism of the first computing system is not authorized.

Example 9 comprises a method comprising: receiving, from a first computing system at a second computing system, information indicating that a power control mechanism of the first computing system has been pressed; responsive to receiving information indicating a request to authenticate a user of the second computing system, attempting to authenticate the user of the second computing system; and sending, from the second computing system to the first computing system, information indicating whether the user is authenticated.

Example 10 comprises the method of Example 9, wherein attempting to authenticate the user of the second computing system comprises verifying an identity of a user of the second computing system via password verification.

Example 11 comprises the method of Example 9, wherein attempting to authenticate the user of the second computing system comprises verifying an identify of a user of the second computing system via biometric verification.

Example 12 comprises the method of Example 11, wherein verifying an identity of the user of the second computing system via biometric verification comprises capturing a fingerprint image, a voice sample, or a facial image.

Example 13 comprises the method of any one of Examples 7-12, wherein the second computing system is a mobile computing device.

Example 14 comprises a method comprising: receiving, at a standalone electronic device, information indicating an operation of a power control mechanism of the standalone electronic device; attempting to authenticate, at the standalone electronic device, a user of the standalone electronic device; and causing the standalone electronic device to transition from a first power state to a second power state that is a lower power state than the first power state if the operation of the power control mechanism is authorized.

Example 15 comprises the method of Example 14, wherein attempting to authenticate the operation of the power control mechanism comprises verifying an identity of a user of the standalone electronic device via password verification.

Example 16 comprises the method of Example 14, wherein attempting to authenticate the operation of the power control mechanism of the standalone electronic device comprises verifying an identity of a user of the standalone electronic device via biometric verification.

Example 17 comprises the method of Example 16, wherein the biometric verification comprises capturing a fingerprint image, an audio sample, or a facial image.

Example 18 comprises the method of any one of Examples 14-17, further comprising: determining that the standalone electronic device is nonresponsive; and causing the standalone electronic device to transition from the first power state to the second power state in response to determining that the standalone electronic device is nonresponse and receiving the information indicating the operation of the power control mechanism.

Example 19 comprises the method of Example 18, wherein determining that the standalone electronic device is nonresponsive comprises determining that the standalone electronic device is in an error state.

Example 20 comprises the method of Example 18, wherein determining that the standalone electronic device is nonresponsive comprises a power cycle control circuit of the standalone electronic device determining that the standalone electronic device has not provided an expected periodic signal indicating that the standalone electronic device is responsive to the power cycle control circuit.

Example 21 comprises the method of Example 18, wherein determining that the standalone electronic device is nonresponsive comprises a power cycle control circuit of the standalone electronic device sending a request to an other component of the standalone electronic device for information indicating a responsiveness of the standalone electronic device and the other component of the standalone electronic device timing out.

Example 22 comprises one or more computer-readable storage media storing computer-executable instructions that, when executed, cause a computing device to perform the method of any one of Examples 1-21.

Example 23 comprises a computing system comprising: one or more processors; and one or more computer-readable storage media storing computer-executable instructions that, when executed by the one or more processors, cause the one or more processors to perform the method of any one of Examples 1-13.

Example 24 comprises a standalone electronic device comprising: one or more processors; and one or more computer-readable storage media storing computer-executable instructions that, when executed by the one or more processors, cause the one or more processors to perform the method of any one of Examples 14-22.

## Claims

1. A method comprising:
receiving, at a first integrated circuit component of a computing system, an indication that a power control mechanism of the computing system has been operated, the first integrated circuit component separate from one or more second integrated circuit components of the computing system upon which an operating system is executing;
responsive to receiving the indication that the power control mechanism has been operated, requesting, from the operating system, whether a user is logged into the computing system;
receiving, from the operating system, an indication of whether a user is logged into the computing system; and
causing the computing system to transition from a first power state to a second power state that is a lower power state than the first power state if a user is logged into the computing system.

2. The method of claim 1, further comprising keeping the computing system in the first power state if a user is not logged into the computing system.

3. The method of claim 1 or 2, wherein the indication that the power control mechanism of the computing system has been operated comprises the first integrated circuit component receiving an interrupt indicating that the power control mechanism has been operated.

4. The method of any one of claim 1-3, wherein the power control mechanism is a power button and the indication that a power control mechanism has been operated indicates that the power button has been pressed.

5. The method of any one of claims 1-4, wherein the power control mechanism is a power switch and the indication that a power control mechanism has been operated indicates that the power switch has been toggled.

6. One or more computer-readable storage media storing computer-executable instructions that, when executed, cause the computing system to perform the method of any one of claims 1-5.

7. A computing system comprising one or more computer-readable storage media storing computer-executable instructions that, when executed by the computing system, cause the computing system to perform the method of any one of claims 1-5.

8. A method comprising:
receiving, from a first computing system at a second computing system, information indicating that a power control mechanism of the first computing system has been pressed;
responsive to receiving information indicating a request to authenticate a user of the first computing system, attempting to authenticate the user of the first computing system; and
sending, from the second computing system to the first computing system, information indicating whether the user is authenticated.

9. The method of claim 8, wherein attempting to authenticate the user of the first computing system comprises verifying an identity of the user of the first computing system via password verification.

10. The method of claim 8, wherein attempting to authenticate the user of the first computing system comprises verifying an identify of the user of the first computing system via biometric verification.

11. The method of claim 10, wherein verifying an identity of the user of the first computing system via biometric verification comprises capturing a fingerprint image, a voice sample, or a facial image.

12. The method of any one of claims 8-11, wherein the second computing system is a mobile computing device.

13. One or more computer-readable storage media storing computer-executable instructions that, when executed, cause the second computing system to perform the method of any one of claims 8-12.

14. One or more computer-readable storage media storing computer-executable instructions that, when executed by the second computing system, cause the second computing system to perform the method of any one of claims 8-12.
